# EUROPÄISCHE PATENTSCHRIFT

(11) **EP 3 504 072 B1**
(45) Veröffentlichungstag und Bekanntmachung des Hinweises auf die Patenterteilung: **07.10.2020**
(21) Anmeldenummer: 17751762.0
(22) Anmeldetag: 14.08.2017
(51) Int. Cl.: B60D 1/26, B60D 1/24

(54) **KUPPLUNGSEINRICHTUNG**
COUPLING DEVICE
SYSTÈME D'ATTELAGE

(30) Priorität: 24.08.2016 AT 507602016
(43) Veröffentlichungstag der Anmeldung: 03.07.2019
(73) Patentinhaber: Scharmüller, Josef, 4892 Fornach (AT); Scharmüller, Josef, jun., 4892 Fornach (AT); Scharmüller, Christine, 4892 Fornach (AT)
(72) Erfinder: Scharmüller, Josef, 4892 Fornach (AT); Scharmüller, Josef, jun., 4892 Fornach (AT); Scharmüller, Christine, 4892 Fornach (AT)
(74) Vertreter: Gibler & Poth Patentanwälte KG
(86) Internationale Anmeldenummer: PCT/EP2017/070569
(87) Internationale Veröffentlichungsnummer: WO 2018/036851

(56) Entgegenhaltungen:
- EP-A2- 1 418 067
- WO-A1-2009/078817
- US-B1- 7 669 878

## Beschreibung

Die Erfindung betrifft eine Kupplungseinrichtung für einen Fahrzeuganhänger gemäß dem Oberbegriff des Patentanspruches 1.

Eine Kupplungseinrichtung ist eine Einrichtung am Fahrzeuganhänger, welche dazu vorgesehen ist den Fahrzeuganhänger lösbar und beweglich an das Zugfahrzeug anzukuppeln.

Insbesondere zum Ziehen von schweren Anhängern, beispielsweise im Bereich der Landwirtschaft, sind Kupplungseinrichtung bekannt, welche ein an dem Anhänger befestigbares Lagergehäuse aufweisen, wobei ein, ein Kupplungselement aufweisender Schaft in das Lagergehäuse eingesteckt ist und an einer dem Kupplungselement gegenüberliegenden Seite mit einem verschraubten Sicherungselement gesichert ist. Durch diese Bauweise kann der Schaft ausgetauscht werden. Der Schaft ist üblicherweise rotationssymmetrisch um die Mittelachse, wobei ein Durchmesser des Schaftes mit zunehmender Entfernung vom Kupplungselement abnimmt, damit der Schaft in das Lagergehäuse gesteckt werden kann.

Nachteilig daran ist, dass bei einem Brand auf dem Fahrzeuganhänger der Zugang zu der Kupplungseinrichtung oftmals verhindert ist oder nur unter Gefahr möglich ist, weshalb die Kupplung nicht zuverlässig getrennt werden kann. Ein derartiges Feuer kann beispielsweise bei der Ernte von trockenem Heu oder anderen leicht entzündlichen Gütern ausbrechen. Hierbei kann das Feuer von dem Fahrzeuganhänger auf das Zugfahrzeug übergreifen, wodurch das gesamte Fahrzeuggespann durch das Feuer beschädigt wird.

Aus der US 7 669 878 B1 ist eine Kupplungseinrichtung für einen Fahrzeuganhänger bekannt, welche einen Schaft mit einem Kupplungselement aufweist. Der Schaft ist in einem Lagergehäuse angeordnet und über einen Querbolzen in dem Lagergehäuse fixiert. Der Querbolzen weist an einem Ende eine gestauchte Feder auf und an einem gegenüberliegenden Ende einen Splint, wobei der Splint über ein Zugseil mechanisch entfernt werden kann.

Aus der WO 2009/078817 A1 ist eine Kupplungseinrichtung mit einer als Hebel ausgebildeten Notentriegelungsvorrichtung bekannt.

Aus der EP 1 418 067 A2 ist eine Zugöse bekannt, deren Schaft drehbar an einem Flansch befestigt ist.

Aufgabe der Erfindung ist es daher eine Kupplungseinrichtung der eingangs genannten Art anzugeben, mit welcher die genannten Nachteile vermieden werden können, mit welcher auch in Notsituationen die Kupplung zwischen Fahrzeuganhänger und Zugfahrzeug zuverlässig gelöst werden kann. Erfindungsgemäß wird dies durch die Merkmale des Patentanspruches 1 erreicht. Dadurch ergibt sich der Vorteil, dass die Verbindung zwischen Fahrzeuganhänger und Zugfahrzeug auch in einem Notfall schnell und zuverlässig getrennt werden kann, wobei eine zuverlässige Trennung kein Bedienpersonal im Bereich der Kupplung selbst erfordert. Durch die Notentriegelungsvorrichtung kann im Notfall die Verbindung zwischen dem Lagergehäuse und dem Schaft gelöst werden, wodurch der, durch das Kupplungselement noch immer mit dem Zugfahrzeug gekuppelte Schaft aus dem Lagergehäuse gezogen werden kann, und derart das Zugfahrzeug sich vom Fahrzeuganhänger entfernen kann. Dadurch, dass die Notentriegelungsvorrichtung die Verbindung zwischen Schaft und Lagergehäuse vorgebbar trennt ergibt sich der Vorteil, dass die Notentriegelungsvorrichtung hierbei vergleichsweise kompakt ausgebildet sein kann, als wenn die Verbindung im Bereich des Kupplungselementes getrennt werden würde. Weiters schränkt die Notentriegelungsvorrichtung dadurch nicht den maximalen Schwenkwinkel zwischen Fahrzeuganhänger und Zugfahrzeug ein. Weiters können dadurch unterschiedliche Kupplungselemente ohne Umbau der Notentriegelungsvorrichtung verwendet werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform der Kupplungseinrichtung als axonometrische Darstellung;
Fig. 2 die erste bevorzugte Ausführungsform der Kupplungseinrichtung als Explosionsdarstellung;
Fig. 3 die erste bevorzugte Ausführungsform der Kupplungseinrichtung in Seitenansicht;
Fig. 4 der Schnitt entlang der Linie A-A in Fig. 3;
Fig. 5 eine zweite bevorzugte Ausführungsform der Kupplungseinrichtung als axonometrische Darstellung;
Fig. 6 die zweite bevorzugte Ausführungsform der Kupplungseinrichtung als Explosionsdarstellung;
Fig. 7 die zweite bevorzugte Ausführungsform der Kupplungseinrichtung in Seitenansicht; und
Fig. 8 der Schnitt entlang der Linie A-A in Fig. 7.

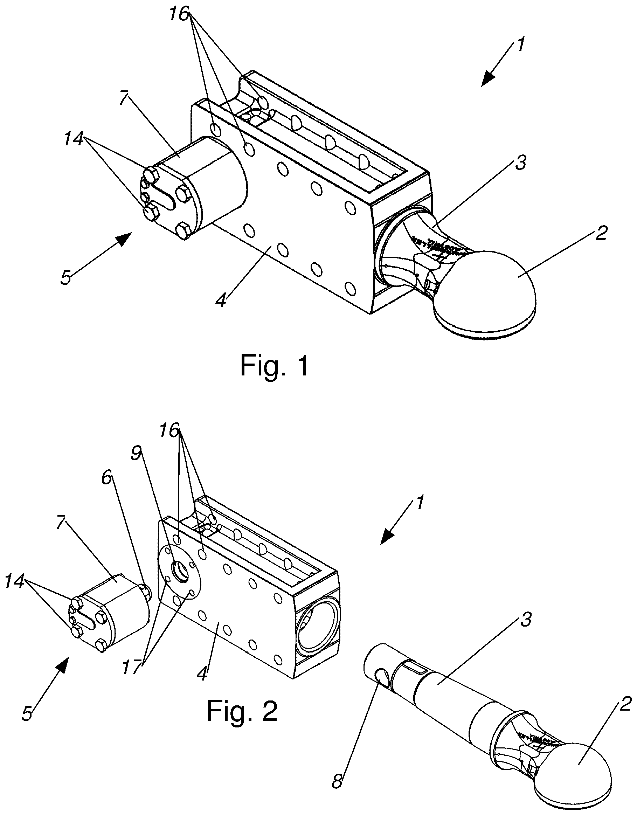

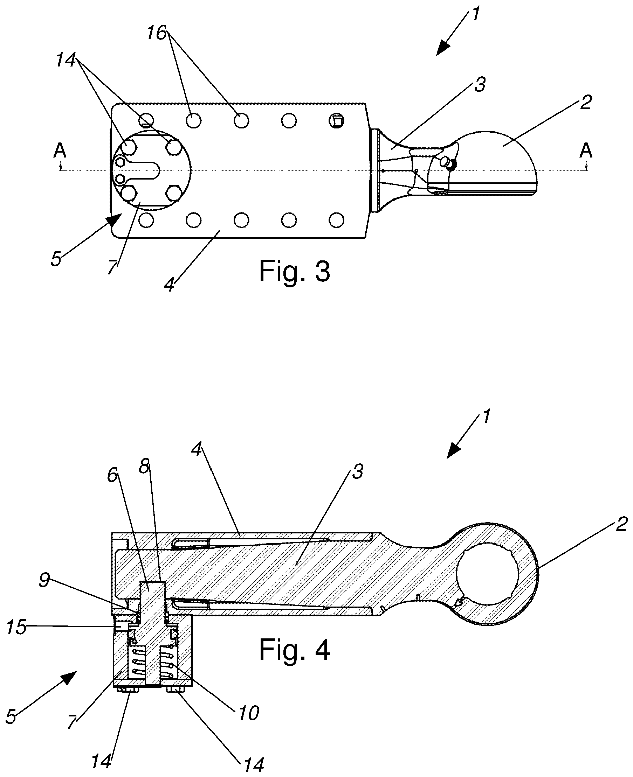

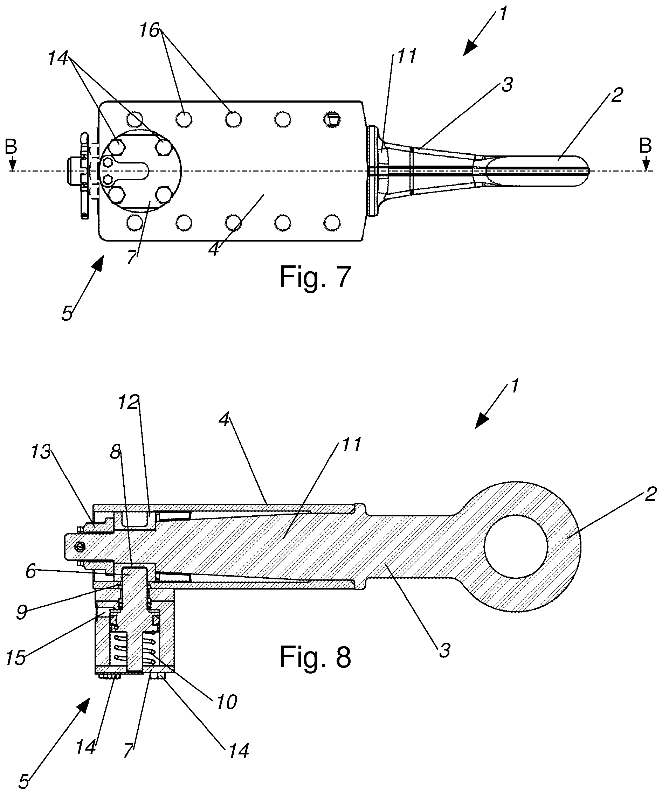

Die Fig. 1 bis 8 zeigen bevorzugte Ausführungsformen einer Kupplungseinrichtung 1 für einen Fahrzeuganhänger, wobei ein, ein Kupplungselement 2 aufweisender gerader Schaft 3 in einem Lagergehäuse 4 angeordnet ist, wobei das Lagergehäuse 4 zum Verbinden mit einer Deichsel vorgesehen ist und das Kupplungselement 2 zum Kuppeln mit einem Gegenkupplungselement eines Zugfahrzeuges vorgesehen ist. Eine Kupplungseinrichtung 1 ist eine Einrichtung, welche dazu vorgesehen ist ein Fahrzeuganhänger mit einem Zugfahrzeug vorgebbar lösbar und schwenkbar mit einem Zugfahrzeug zu verbinden. Hierfür weist die Kupplungseinrichtung 1 ein Kupplungselement 2 auf, welches dazu vorgesehen ist mit einem Gegenkupplungselement des Zugfahrzeuges gekuppelt zu werden, um den Fahrzeuganhänger an das Zugfahrzeug zu kuppeln.

Das Kupplungselement 2 kann insbesondere eine Ringöse oder eine Aufnahmepfanne sein.

Eine bevorzugte Ausführungsform mit einer Aufnahmepfanne als Kupplungselement 2 ist beispielhaft in Fig. 1 bis 4 dargestellt. Bei einer Aufnahmepfanne ist das Gegenkupplungselement als Kupplungskugel ausgebildet.

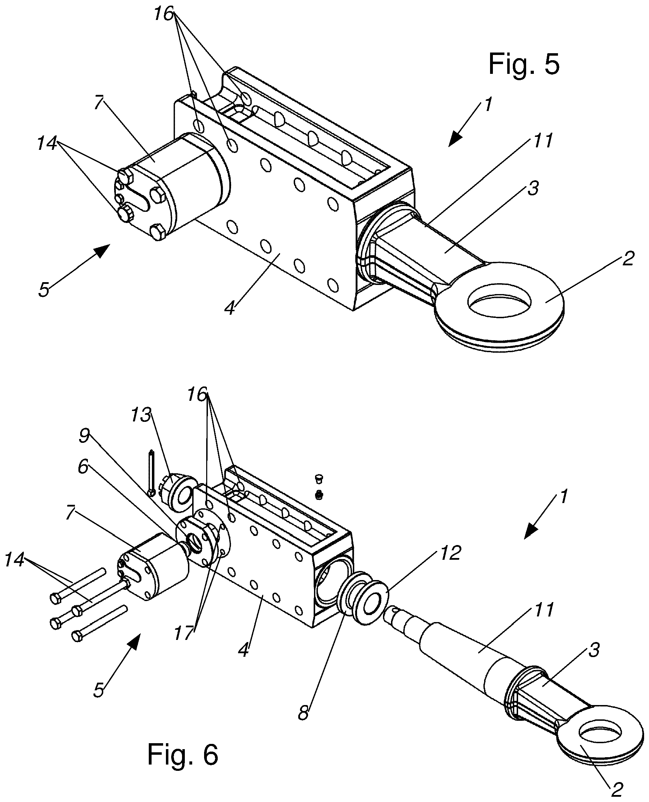

Eine bevorzugte Ausführungsform mit einer Ringöse als Kupplungselement 2 ist beispielhaft in Fig. 5 bis 8 dargestellt. Bei der Ringöse ist das Gegenkupplungselement als Kupplungsbolzen ausgebildet.

In der Betriebsstellung ist der Schaft 3 zum Teil in dem Lagergehäuse 4 angeordnet, wobei das Lagergehäuse 4 vorzugsweise derart ausgebildet ist, dass das Lagergehäuse 4 an eine Deichsel eines Fahrzeuganhängers befestigbar ist. Hierbei kann das Lagergehäuse 4 eine insbesondere ebene Befestigungsfläche aufweisen, welche in einem befestigten Zustand der Kupplungseinrichtung 1 eine Deichsel des Fahrzeuganhängers kontaktiert. Weiters kann das Lagergehäuse 4 Bohrungen 16 zur Aufnahme von Schrauben oder anderen Verbindungsmittel für die Befestigung an der Deichsel aufweisen. Die Ausbildung der Kupplungseinrichtung 1 umfassend einen Schaft und ein Lagergehäuse 4 ist insbesondere für die Aufnahme hoher Zuglasten und Stützlasten, wie diese beispielsweise in der Landwirtschaft auftreten, geeignet.

Vorgesehen ist, dass das Lagergehäuse 4 eine Notentriegelungsvorrichtung 5 aufweist, dass ein Verriegelungselement 6 der Notentriegelungsvorrichtung 5 mittels einer Betätigungseinrichtung 7 zwischen einer Verriegelungsstellung und einer Entriegelungsstellung bewegbar ist, wobei in der Verriegelungsstellung der Schaft 3 durch das Verriegelungselement 6 formschlüssig in dem Lagergehäuse 4 gehalten ist und in der Entriegelungsstellung der Schaft 3 aus dem Lagergehäuse 4 herausziehbar ist. Die Notentriegelungsvorrichtung 5 ist eine Vorrichtung der Kupplungseinrichtung 1, welche dazu vorgesehen ist im Notfall vorgebbar die Verbindung zwischen dem Schaft 3 und dem Lagergehäuse 4 zu lösen. Dieser Vorgang kann insbesondere als Auslösen der Notentriegelungsvorrichtung 5 bezeichnet werden. Dies erfolgt mittels des Verriegelungselementes 6, welches zwischen der Verriegelungsstellung und der Entriegelungsstellung bewegbar ist. In der Verriegelungsstellung hält das Verriegelungselement 6 den Schaft 3 im dem Lagergehäuse 4. In der Entriegelungsstellung dagegen kann der Schaft 3 aus dem Lagergehäuse 4 gezogen werden. Die Bewegung des Verriegelungselementes 6 zwischen der Verriegelungsstellung und der Entriegelungsstellung erfolgt mittels der Betätigungseinrichtung 7. Die Betätigungseinrichtung 7 kann insbesondere als aus der Fahrerkabine des Zugfahrzeuges aus betätigbar ausgebildet sein.

Weiters ist ein Fahrzeuganhänger mit einer derartigen Kupplungseinrichtung 1 vorgesehen. Der Fahrzeuganhänger kann insbesondere eine Deichsel aufweisen, an welcher die Kupplungseinrichtung 1 befestigt ist.

Weiters ist ein Fahrzeuggespann mit einem derartigen Fahrzeuganhänger und einem Zugfahrzeug mit einer Fahrerkabine vorgesehen, wobei die Betätigungseinrichtung 7 von der Fahrerkabine aus betätigbar ist. Die Fahrerkabine ist hierbei jener Platz des Zugfahrzeuges, an welchem sich der Fahrer während des Fahrens des Zugfahrzeuges befindet. Hierbei kann in der Fahrerkabine ein zusätzliches Bedienelement angeordnet sein, welches mit der Betätigungseinrichtung 7 koppelbar ist.

Dadurch ergibt sich der Vorteil, dass die Verbindung zwischen Fahrzeuganhänger und Zugfahrzeug auch in einem Notfall schnell und zuverlässig getrennt werden kann, wobei eine zuverlässige Trennung kein Bedienpersonal im Bereich der Kupplung selbst erfordert. Durch die Notentriegelungsvorrichtung 1 kann im Notfall die Verbindung zwischen dem Lagergehäuse 4 und dem Schaft 3 gelöst werden, wodurch der, durch das Kupplungselement 2 noch immer mit dem Zugfahrzeug gekuppelte Schaft 3 aus dem Lagergehäuse 4 gezogen werden kann, und derart das Zugfahrzeug sich vom Fahrzeuganhänger entfernen kann. Dadurch, dass die Notentriegelungsvorrichtung 1 die Verbindung zwischen Schaft 3 und Lagergehäuse 4 vorgebbar trennt ergibt sich der Vorteil, dass die Notentriegelungsvorrichtung 1 hierbei vergleichsweise kompakt ausgebildet sein kann, als wenn die Verbindung im Bereich des Kupplungselementes 2 getrennt werden würde. Weiters schränkt die Notentriegelungsvorrichtung 1 dadurch nicht den maximalen Schwenkwinkel zwischen Fahrzeuganhänger und Zugfahrzeug ein. Weiters können dadurch unterschiedliche Kupplungselemente 2 ohne Umbau der

Notentriegelungsvorrichtung 1 verwendet werden.

Der Schaft 3 kann insbesondere einen im Wesentlichen rotationssymmetrischen Teil aufweisen, welcher in dem Lagergehäuse 4 angeordnet sein kann.

Erfindungsgemäß ist vorgesehen, dass das Verriegelungselement 6 als ein, insbesondere im Wesentlichen senkrecht zu einer Mittelachse des Schaftes 3, beweglicher Bolzen ausgebildet ist, dass der Schaft 3 eine Aufnahme 8 für den Bolzen aufweist, und dass der Bolzen in der Verriegelungsstellung in der Aufnahme 8 angeordnet ist und in der Entriegelungsstellung außerhalb der Aufnahme 8 angeordnet ist. Dadurch kann die Notentriegelungsvorrichtung 1 besonders einfach ausgebildet sein.

Weiters kann vorgesehen sein, dass das Lagergehäuse 4 eine Durchführung 9 für das Verriegelungselement 6 aufweist. Durch das Einführen des Verriegelungselementes 6 durch die Durchführung 9 kann einfach eine formschlüssige Verbindung erreicht werden. Die Durchführung 9 kann in der Verriegelungsstellung insbesondere fluchtend mit der Aufnahme 8 angeordnet sein.

Bevorzugt kann vorgesehen sein, dass die Betätigungseinrichtung 7, bevorzugt lösbar, an dem Lagergehäuse 4 befestigt ist. Insbesondere kann das Lagergehäuse 4 um die Durchführung 9 angeordnete Verbindungsmittelaufnahmen 17 aufweisen. Als Verbindungsmittel 14 zum Befestigen der Betätigungseinrichtung 7 an dem Lagergehäuse 4 können insbesondere Schrauben vorgesehen sein, wobei die Verbindungsmittelaufnahmen 17 als Gewindebohrungen ausgebildet sind.

Weiters kann vorgesehen sein, dass die Notentriegelungsvorrichtung 5 eine das Verriegelungselement 6 in Richtung der Verriegelungsstellung drückende Feder 10 aufweist. Dadurch kann erreicht werden, dass das Verriegelungselement 6 von selber in die Verriegelungsstellung bewegt wird, wobei bei einem technischen Gebrechen der Betätigungseinrichtung 7 erreicht wird, beispielsweise einem Verlust der Hydraulikflüssigkeit, dass das Verriegelungselement 6 nicht plötzlich und unbeabsichtigt in die Entriegelungsstellung verbracht wird.

Erfindungsgemäß ist vorgesehen,
dass die Aufnahme 8 als längliche, insbesondere umlaufende, Nut ausgebildet ist. Die Längserstreckung der Nut kann insbesondere quer zu der Mittelachse des Schaftes 3 sein. Vorteilhaft an der länglichen Nut als Aufnahme 8 ist, dass der Schaft 3 in dem Lagergehäuse 4 auch in der Verriegelungsstellung des Verriegelungselementes 6 um die Mittelachse gedreht werden kann, wodurch ein kippender Fahrzeuganhänger nicht auch das Zugfahrzeug umkippt. Eine länglichen Nut als Aufnahme 8 kann insbesondere bei einer Ringöse als Kupplungselement 2 vorgesehen sein. Eine bevorzugte Ausführungsform mit einer länglichen Nut als Aufnahme 8 ist beispielhaft in Fig. 5 bis 8 dargestellt.

Die Nut kann insbesondere umlaufend sein, also um den ganzen Umfang des Schaftes 3. Alternativ kann die Nut nur um einen Teil des Umfanges des Schaftes 3 verlaufen, und derart den Drehwinkel des Schaftes 3 um seine Mittelasche einschränken.

Es kann vorgesehen sein, dass die Nut um den Umfang eine konstante Tiefe aufweist, wie dies beispielhaft in Fig. 6 dargestellt ist.

Besonders bevorzugt kann vorgesehen sein, dass die längliche Nut eine variable Tiefe aufweist. Durch die variable Tiefe der Nut kann bei einem Verriegelungselement 6 mit der Feder 10 erreicht werden, dass durch das Verriegelungselement 6 eine Rückstellkraft in Richtung der Stelle der Nut mit der tiefsten Tiefe ausgeübt wird. Die Tiefe der Nut ist hierbei senkrecht zu der Mittelachse des Schaftes 3 zu messen. Die Nut kann insbesondere in einem ersten Bereich der Nut die größte Tiefe aufweisen, in welchem das Verriegelungselement 6 bei einer waagrechten Stellung des Kupplungselementes 2 eingreift. Dadurch kann das Kupplungselement 2 durch das Verriegelungselement 6 in der Waagrechten gehalten werden, wobei weiterhin ein Drehen des Kupplungselementes 2 um die Mittelachse des Schaftes 3 bei einem Umkippen gewährleistet ist.

Alternativ kann vorgesehen sein, dass die Aufnahme 8 als Loch, insbesondere Sackloch, ausgebildet ist. Die Ausbildung als Loch kann insbesondere bei einer Aufnahmepfanne als Kupplungselement 2 vorgesehen sein, da hier das Kupplungselement 2 an sich bereits einen Schutz gegenüber dem Umkippen des Zugfahrzeuges bietet. Eine bevorzugte Ausführungsform mit einem Sackloch als Aufnahme 8 ist beispielhaft in Fig. 1 bis 4 dargestellt.

Insbesondere kann vorgesehen sein, dass der Schaft 3 mit der Aufnahme 8 einstückig ausgebildet ist. Hierbei ist die Aufnahme 8 direkt in dem, den Schaft 3 ausbildenden Körper ausgebildet. Vorteilhaft daran ist die einfache Bauweise.

Alternativ kann vorgesehen sein, dass der Schaft 3 einen das Kupplungselement 2 aufweisenden Grundkörper 11, einen die Aufnahme 8 aufweisenden Aufnahmekörper 12, und ein den Aufnahmekörper 12 lösbar am Grundkörper 11 befestigendes Sicherungselement 13 aufweist. Der Aufnahmekörper 12 kann insbesondere ein am Grundkörper 11 aufsteckbarer Ring sein, wobei der Aufnahmekörper 12 besonders bevorzugt an der Außenseite eine umlaufende Nut aufweist, welche die Aufnahme 8 ausbildet. Das Sicherungselement 13 kann insbesondere als Schraubenmutter ausgebildet sein, wobei besonders bevorzugt der Grundkörper 11 an einem, dem Kupplungselement 2 abgewandten Ende ein Gewinde zur Aufnahme des Sicherungselementes 13 aufweist. Vorteilhaft daran ist, dass der Aufnahmekörper 12, welcher im Betrieb abgenutzt wird, leicht ausgetauscht werden kann. Weiters ergibt sich der Vorteil, dass der Schaft 3 für Wartungszwecke auch ohne Betätigung der Notentriegelungsvorrichtung 5 ausgetauscht werden kann.

Besonders bevorzugt kann vorgesehen sein, dass die Betätigungseinrichtung 7 hydraulisch betätigbar ist, und insbesondere dass das Verriegelungselement 6 durch Aufbringen eines Hydraulikdruckes von der Verriegelungsstellung in die Entriegelungsstellung verbringbar ist. Hierbei kann insbesondere vorgesehen sein, dass die Notentriegelungsvorrichtung 5 ein Hydrauliksystem zum Betätigen der Betätigungseinrichtung 7 aufweist. Das Hydrauliksystem kann Teil der Hydraulik des Fahrzeuganhängers sein, welche mit der Hydraulik des Zugfahrzeuges kuppelbar ist. Vorteilhaft daran ist, dass durch die Hydraulik einfach die für den zuverlässigen Betrieb der Notentriegelungsvorrichtung 5 benötigte Kraft zur Verfügung gestellt werden kann.

Insbesondere kann vorgesehen sein, dass die Betätigungseinrichtung 7 als Hydraulikzylinder ausgebildet ist, wobei das Verriegelungselement 6 als Hydraulikkolben ausgebildet ist. Bevorzugt kann vorgesehen sein, dass die Betätigungseinrichtung 7 einen Hydraulikanschluss 15 aufweist.

Alternativ kann die Betätigungseinrichtung 7 elektrisch ausgebildet sein.

Die Betätigungseinrichtung 7 kann insbesondere mit einer Fernbedienung, insbesondere einer Kabelfernbedienung, verbunden sein, um die Notentriegelungsvorrichtung 5 auszulösen.

Die Fernbedienung kann insbesondere auf dem Zugfahrzeug, insbesondere in der Fahrerkabine, angeordnet sein. Die Fernbedienung kann insbesondere ein manuell betätigbares Bedienelement, insbesondere einen Druckknopf oder einen Schalter, aufweisen, bei dessen Betätigung das Verriegelungselement 6 von der Verriegelungsstellung in die Entriegelungsstellung verbracht wird.

Weiters kann vorgesehen sein, dass die Fernbedienung und/oder das Hydrauliksystem mit dem Bedienelement in Serie geschaltete weitere Schalter aufweist, welche eine Betätigung der Betätigungseinrichtung 7 nur ermöglichen, wenn vorbestimmte Bedingungen erfüllt sind.

Der weitere Schalter kann insbesondere ein manuell betätigbarer Schalter, insbesondere ein Drehknopf, sein. Hierbei ist vor dem Betätigen des Bedienelementes zuerst der manuell betätigbarer Schalter zu betätigen, wodurch die Wahrscheinlichkeit einer unbeabsichtigten Auslösen der Notentriegelungsvorrichtung 5 verringert wird.

Die weiteren Schalter können auch Schalter umfassen, welche bei einem Unterschreiten einer Grenzgeschwindigkeit, insbesondere 15 km/h, und/oder bei einem Abschalten des Zapfwellenantriebs die Schaltkontakte schließen. Dadurch ergibt sich der Vorteil, dass ein Auslösen der Notentriegelungsvorrichtung 5 bei gefährlichen Randbedingungen verhindert werden kann.

Weiters kann vorgesehen sein, dass das Hydrauliksystem der Notentriegelungsvorrichtung 5 eine manuell betätigbare Steuerungskonsole aufweist. Die Steuerungskonsole kann insbesondere gut zugänglich im Bereich der Deichsel angeordnet sein. Die Steuerungskonsole kann insbesondere einen Handhebel aufweisen zum Betätigen der Betätigungseinrichtung 7 aufweisen. Dadurch kann auch bei defekter Fernbedienung oder für Wartungszwecke die Notentriegelungsvorrichtung 5 ausgelöst werden.

## Patentansprüche

1. Kupplungseinrichtung (1) für einen Fahrzeuganhänger, wobei ein, ein Kupplungselement (2) aufweisender gerader Schaft (3) in einem Lagergehäuse (4) angeordnet ist, wobei das Lagergehäuse (4) zum Verbinden mit einer Deichsel vorgesehen ist und das Kupplungselement (2) zum Kuppeln mit einem Gegenkupplungselement eines Zugfahrzeuges vorgesehen ist, wobei das Lagergehäuse (4) eine Notentriegelungsvorrichtung (5) aufweist, wobei ein Verriegelungselement (6) der Notentriegelungsvorrichtung (5) mittels einer Betätigungseinrichtung (7) zwischen einer Verriegelungsstellung und einer Entriegelungsstellung bewegbar ist, wobei in der Verriegelungsstellung der Schaft (3) durch das Verriegelungselement (6) formschlüssig in dem Lagergehäuse (4) gehalten ist und in der Entriegelungsstellung der Schaft (3) aus dem Lagergehäuse (4) herausziehbar ist, wobei das Verriegelungselement (6) als ein, insbesondere im Wesentlichen senkrecht zu einer Mittelachse des Schaftes (3), beweglicher Bolzen ausgebildet ist, wobei der Schaft (3) eine Aufnahme (8) für den Bolzen aufweist, wobei der Bolzen in der Verriegelungsstellung in der Aufnahme (8) angeordnet ist und in der Entriegelungsstellung außerhalb der Aufnahme (8) angeordnet ist, **dadurch gekennzeichnet, dass** die Aufnahme (8) als längliche, insbesondere umlaufende, Nut ausgebildet ist.

2. Kupplungseinrichtung (1) nach Anspruch 1, **dadurch gekennzeichnet, dass** das Lagergehäuse (4) eine Durchführung (9) für das Verriegelungselement (6) aufweist.

3. Kupplungseinrichtung (1) nach Anspruch 1 oder 2, **dadurch gekennzeichnet, dass** die Notentriegelungsvorrichtung (5) eine das Verriegelungselement (6) in Richtung der Verriegelungsstellung drückende Feder (10) aufweist.

4. Kupplungseinrichtung (1) nach einem der Ansprüche 1 bis 3, **dadurch gekennzeichnet, dass** die längliche Nut eine variable Tiefe aufweist.

5. Kupplungseinrichtung (1) nach einem der Ansprüche 1 bis 4, **dadurch gekennzeichnet, dass** der Schaft (3) mit der Aufnahme (8) einstückig ausgebildet ist.

6. Kupplungseinrichtung (1) nach einem der Ansprüche 1 bis 4, **dadurch gekennzeichnet, dass** der Schaft (3) einen das Kupplungselement (2) aufweisenden Grundkörper (11), einen die Aufnahme (8) aufweisenden Aufnahmekörper (12), und ein den Aufnahmekörper (12) lösbar am Grundkörper (11) befestigendes Sicherungselement (13) aufweist.

7. Kupplungseinrichtung (1) nach einem der Ansprüche 1 bis 6, **dadurch gekennzeichnet, dass** die Betätigungseinrichtung (7) hydraulisch betätigbar ist, und dass insbesondere das Verriegelungselement (6) durch Aufbringen eines Hydraulikdruckes von der Verriegelungsstellung in die Entriegelungsstellung verbringbar ist.

8. Fahrzeuganhänger mit einer Kupplungseinrichtung (1) nach einem der Ansprüche 1 bis 7.

9. Fahrzeuggespann mit einem Fahrzeuganhänger nach Anspruch 8 und einem Zugfahrzeug mit einer Fahrerkabine, **dadurch gekennzeichnet, dass** die Betätigungseinrichtung (7) von der Fahrerkabine aus betätigbar ist.

## Claims

1. Coupling device (1) for a vehicle trailer, wherein a straight shaft (3) having a coupling element (2) is arranged in a bearing housing (4), wherein the bearing housing (4) is provided for connection to a drawbar and the coupling element (2) is provided for coupling to a mating coupling element of a towing vehicle, wherein the bearing housing (4) has an emergency unlocking device (5), wherein a locking element (6) of the emergency unlocking device (5) can be moved between a locked position and an unlocked position by means of an actuating device (7), wherein, in the locked position, the shaft (3) is held positively in the bearing housing (4) by the locking element (6) and, in the unlocked position, the shaft (3) can be pulled out of the bearing housing (4), wherein the locking element (6) is designed as a bolt that is especially movable substantially perpendicular to a central axis of the shaft (3), wherein the shaft (3) has a receptacle (8) for the bolt, wherein the bolt is arranged in the receptacle (8) in the locked position and is arranged outside the receptacle (8) in the unlocked position, **characterized in that** the receptacle (8) is designed as an elongated, in particular circumferential, groove.

2. Coupling device (1) according to claim 1, **characterized in that** the bearing housing (4) has a passage (9) for the locking element (6).

3. Coupling device (1) according to claim 1 or 2, **characterized in that** the emergency unlocking device (5) has a spring (10) which presses the locking element (6) in the direction of the locked position.

4. Coupling device (1) according to one of claims 1 to 3, **characterized in that** the elongated groove has a variable depth.

5. Coupling device (1) according to one of the claims 1 to 4, **characterized in that** the shaft (3) is integrally formed with the receptacle (8).

6. Coupling device (1) according to one of claims 1 to 4, **characterized in that** the shaft (3) has a base body (11) having the coupling element (2), a receiving body (12) having the receptacle (8), and a securing element (13) releasably fastening the receiving body (12) to the base body (11).

7. Coupling device (1) according to one of claims 1 to 6, **characterized in that** the actuating device (7) can be hydraulically actuated, and **in that** in particular the locking element (6) can be moved from the locked position into the unlocked position by applying a hydraulic pressure.

8. Vehicle trailer with a coupling device (1) according to one of claims 1 to 7.

9. Vehicle combination with a vehicle trailer according to claim 8 and a towing vehicle with a driver cabin, **characterized in that** the actuating device (7) can be actuated from the driver cabin.

## Revendications

1. Dispositif d'attelage (1) pour une remorque de véhicule, dans lequel une tige droite (3) présentant un élément d'attelage (2) est disposée dans un corps de palier (4), le corps de palier (4) étant conçu pour la liaison avec un timon et l'élément d'attelage (2) pour l'accouplement avec un élément d'attelage correspondant d'un véhicule tracteur, dans lequel le corps de palier (4) présente un dispositif de déverrouillage de secours (5), dans lequel un élément de verrouillage (6) du dispositif de déverrouillage de secours (5) peut être déplacé au moyen d'un dispositif d'actionnement (7) entre une position de verrouillage et une position de déverrouillage, dans lequel la tige (3) est retenue par engagement positif par l'élément de verrouillage (6) dans le corps de palier (4) dans la position de verrouillage et la tige (3) peut être retirée du corps de palier (4) dans la position de déverrouillage, dans lequel l'élément de verrouillage (6) est conçu comme un boulon mobile, en particulier dans un sens sensiblement perpendiculaire à un axe médian de la tige (3), la tige (3) présentant un logement (8) pour le boulon, lequel boulon est disposé dans le logement (8) dans la position de verrouillage et en dehors du logement (8) dans la position de déverrouillage, **caractérisé en ce que** le logement (8) est conformé comme une gorge allongée, de préférence circonférentielle.

2. Dispositif d'attelage (1) selon la revendication 1, **caractérisé en ce que** le corps de palier (4) présente une traversée (9) pour l'élément de verrouillage (6).

3. Dispositif d'attelage (1) selon la revendication 1 ou 2, **caractérisé en ce que** le dispositif de déverrouillage de secours (5) présente un ressort (10) qui pousse l'élément de verrouillage (6) vers la position de verrouillage.

4. Dispositif d'attelage (1) selon l'une des revendications 1 à 3, **caractérisé en ce que** la gorge allongée présente une profondeur variable.

5. Dispositif d'attelage (1) selon l'une des revendications 1 à 4, **caractérisé en ce que** la tige (3) est formée d'un seul tenant avec le logement (8).

6. Dispositif d'attelage (1) selon l'une des revendications 1 à 4, **caractérisé en ce que** la tige (3) présente un corps de base (11) qui comporte l'élément d'attelage (2), un corps de logement (12) qui comporte le logement (8) et un élément de sûreté (13) qui fixe le corps de logement (12) au corps de base (11) de façon à pouvoir être défait.

7. Dispositif d'attelage (1) selon l'une des revendications 1 à 6, **caractérisé en ce que** le dispositif d'actionnement (7) peut être actionné de façon hydraulique et en particulier **en ce que** l'élément de verrouillage (6) peut être amené de la position de verrouillage à la position de déverrouillage par l'application d'une pression hydraulique.

8. Remorque de véhicule avec un dispositif d'attelage (1) selon l'une des revendications 1 à 7.

9. Attelage de véhicules avec une remorque de véhicule selon la revendication 8 et un véhicule tracteur muni d'une cabine de conduite, **caractérisé en ce que** le dispositif d'actionnement (7) peut être actionné à partir de la cabine de conduite.
